(19) Europäisches Patentamt
European Patent Office
Office européen des brevets

(11) **EP 2 488 838 B1**

(12) **FASCICULE DE BREVET EUROPEEN**

(45) Date de publication et mention de la délivrance du brevet:
**09.07.2014 Bulletin 2014/28**

(21) Numéro de dépôt: **10784560.4**

(22) Date de dépôt: **12.10.2010**

(51) Int Cl.:
*G01H 9/00* $^{(2006.01)}$    *G01P 5/26* $^{(2006.01)}$
*G01S 17/58* $^{(2006.01)}$    *G01P 5/24* $^{(2006.01)}$

(86) Numéro de dépôt international:
**PCT/FR2010/052157**

(87) Numéro de publication internationale:
**WO 2011/045525 (21.04.2011 Gazette 2011/16)**

(54) **PROCÉDÉ ET DISPOSITIF D'ESTIMATION DE LA PRESSION ACOUSTIQUE DANS UN FLUIDE EN MOUVEMENT ET PROGRAMME D'ORDINATEUR**

VERFAHREN UND VORRICHTUNG ZUR BESTIMMUNG DES AKUSTISCHEN DRUCKS IN EINER BEWEGTEN FLÜSSIGKEIT UND COMPUTERPROGRAMM DAFÜR

METHOD AND DEVICE FOR ESTIMATING THE ACOUSTIC PRESSURE IN A MOVING FLUID AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2009 FR 0957157**

(43) Date de publication de la demande:
**22.08.2012 Bulletin 2012/34**

(73) Titulaire: **ONERA (Office National d'Etudes et de Recherches Aérospatiales)**
**92320 Châtillon (FR)**

(72) Inventeurs:
• **SIMON, Frank**
  **F-31560 Saint Leon (FR)**
• **PIOT, Estelle**
  **F-31520 Ramonville Ste Agne (FR)**

(74) Mandataire: **Cabinet Plasseraud**
**52, rue de la Victoire**
**75440 Paris Cedex 09 (FR)**

(56) Documents cités:
• **LAVIEILLE M ET AL: "Measurement of acoustic quantity fields in duct flow by Laser Doppler Velocimetry", COLLECTION OF TECHNICAL PAPERS; 12TH AIAA/CEAS AEROACOUSTICS CONFERENCE; CAMBRIDGE, MASSACHUSETTS, 8-10 MAY 2006,, vol. 3, 8 mai 2006 (2006-05-08), pages 1852-1860, XP009133052, ISBN: 978-1-56347-809-3**
• **VIGNOLA J F ET AL: "LASER DETECTION OF SOUND", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US LNKD- DOI: 10.1121/1.401920, vol. 90, no. 3, 1 septembre 1991 (1991-09-01), pages 1275-1286, XP000231982, ISSN: 0001-4966**
• **MINOTTI A ET AL: "Characterization of an acoustic liner by means of Laser Doppler Velocimetry in a subsonic flow", AEROSPACE SCIENCE AND TECHNOLOGY, ELSEVIER MASSON, FR, vol. 12, no. 5, 1 juillet 2008 (2008-07-01), pages 398-407, XP022819924, ISSN: 1270-9638, DOI: DOI:10.1016/J.AST.2007.09.007 [extrait le 2008-07-01]**

**Description**

L'invention concerne un procédé et un dispositif d'estimation de la pression acoustique dans un fluide générée par des ondes acoustiques, et un programme d'ordinateur.

L'invention est appliquée dans le domaine des souffleries aéronautiques, automobiles et ferroviaires pour permettre une analyse fine des champs aérodynamiques et acoustiques notamment autour de maquettes.

A ce jour, l'instrumentation "acoustique" des souffleries à veine fermée est généralement constituée de microphones isolés ou faisant partie d'un rail ou d'une antenne acoustique placée en retrait de la veine, derrière un film de kevlar poreux. Les microphones sont donc intégrés aux parois de la soufflerie ou des maquettes.

Il est apparu, après plusieurs études théoriques et expérimentales, que les rails ne permettaient pas de dépasser l'épaisseur de couches limites turbulentes et qu'ils avaient tendance à perturber les mesures acoustiques (bruits d'origine aérodynamique, réflexions et diffractions) de par leur taille et leur constitution.

Il est également apparu que lors de l'utilisation d'une antenne acoustique, la couche limite le long du film de kevlar a une influence plus ou moins prononcée lorsque la vitesse du fluide est supérieure à 60 mètres par seconde.

En outre, la distance entre les microphones et la source de l'onde acoustique peut avoir pour effet d'occulter certaines sources par rapport à d'autres.

L'état de l'art le plus proche est décrit dans un article issu de travaux de la demanderesse intitulé "Measurement of acoustic quantity fields in duct flow by laser doppler velocimetry" de LAVEILLE M. et Al, publié dans 12th AIAA/CEAS Aeroacoustics Conférence (27th AIAA Aeroacoustics Conférence), 8-10 May 2006, Cambridge, Massachusetts, vol 3, pages 1852-1860). Dans cet article, il est mis en oeuvre une technique de vélocimétrie laser à franges 2 dimensions pour estimer les 2 composantes spatiales des vecteurs vitesses des particules d'ensemencement insérées dans un volume de mesure d'un fluide en mouvement, lesdites vitesses étant générées par des ondes acoustiques ayant un spectre fréquentiel stationnaire.

Cet article ne décrit pas comment estimer les 3 composantes spatiales des vecteurs vitesses des particules d'ensemencement, ni l'estimation de la pression acoustique dans des volumes où le champ acoustique a une structure à 3 dimensions, ni l'estimation d'un champ de pression acoustique dans des volumes macroscopiques de grande dimension, ni l'estimation de l'intensité acoustique dans de tels volumes, car ceci est irréalisable en pratique du fait du nombre de points de mesure et des temps de calcul extrêmement importants que cela nécessiterait. En effet, cet article estime la pression acoustique à partir d'un modèle de propagation global utilisant les déplacements des particules, comme le recommande l'état de l'art, or le calcul des déplacements nécessite l'intégration de vecteurs vitesses le long de trajectoires relativement longues, ce qui rend son application à 3 dimensions irréalisable en pratique.

Cet article, comme d'ailleurs le reste de l'état de l'art du domaine technique considéré, n'enseigne pas comment corriger l'erreur d'échantillonnage, ce qui pose, il est vrai, surtout un problème quand on travaille en 3 dimensions.

Dans l'état de l'art, la localisation de sources sonores au plus près des sources, en présence d'écoulement, était impossible.

L'invention a notamment pour but de résoudre ces problèmes.

A cet effet, l'invention a pour objet un procédé d'estimation de la pression acoustique dans un volume macroscopique d'un fluide selon la revendication 1.

L'invention, contrairement à ce que recommande l'état de l'art (voir par exemple l'article cité plus haut comme étant l'état de l'art le plus proche, page 8, 2eme paragraphe), fait le choix du modèle de propagation d'Euler, malgré sa moins bonne précision pour l'estimation de l'intensité acoustique. L'état de l'art le plus proche utilise le modèle de propagation de Galbrun qui calcule la pression acoustique en fonction des vecteurs de déplacement des particules, et donc nécessite d'intégrer des vecteurs vitesses de ces particules le long des trajectoires de l'ordre d'une longueur d'onde acoustique. Ceci a deux conséquences directes :

■ le maillage de mesure pour déduire la pression acoustique à partir des vitesses mesurées le long d'une trajectoire n'est pas indépendant de la longueur d'onde acoustique ;
■ toute mesure de pression acoustique en un point nécessite de nombreuses mesures de vitesse le long d'un segment de droite parallèle à la direction de l'écoulement. En effet, pour pouvoir considérer des trajectoires autres que celles parallèles à la direction de l'écoulement, il faut disposer des vitesses en 3 dimensions, or le nombre de points de mesure pour réaliser toutes les intégrations nécessaires au calcul des pressions acoustiques dans un volume macroscopique donné rend le 3 dimensions inaccessible aux méthodes de l'état de l'art (D1 traite uniquement des mesures de vitesse en 2 dimensions).

Le choix d'utiliser Euler comme modèle de propagation permet d'obtenir la pression acoustique en un point directement à partir des mesures de la vitesse acoustique en ce point sans intégration puisqu'il n'y a pas de calcul du déplacement. Ceci a permis d'envisager de travailler en trois dimensions.

Le travail en 3 dimensions a eu deux conséquences directes :

■ la longueur d'onde acoustique n'est pas contraignante vis-à-vis du maillage employé pour déduire la pression acoustique ;
■ ce maillage de l'écoulement peut être indépendant de la direction de l'écoulement, du coup, on peut faire des mesures sans connaissance a priori de cette direction de l'écoulement.

C'est ce premier avantage qui a permis de réduire de façon déterminante le nombre de points de mesure de la pression acoustique, ce qui est d'autant plus appréciable pour les longueurs d'onde acoustiques élevées, et a permis la résolution numériques des équations d'Euler 3 dimensions sur un volume macroscopique, de l'ordre de la taille d'un microphone, et bien entendu par suite dans un espace nettement plus grand.

L'accès à la 3ième dimension permet de plus, par l'intermédiaire du calcul de l'intensité acoustique, de déterminer la direction de l'onde acoustique et de déduire la position de la source acoustique à partir de la forme du front d'onde, ce qui était complètement irréalisable avec le modèle en 2 dimensions. Ces gains opérationnels du nouveau procédé n'étaient pas évidents pour l'homme du métier. La localisation de la source sonore au plus près des sources, en présence d'écoulement, était d'ailleurs impossible jusqu'à présent.

C'est la combinaison du modèle de propagation d'Euler et de l'acquisition en 3 dimensions qui permet d'obtenir les résultats inattendus suivants :

■ Mesure d'un champ de vitesse, extraction de la pression et de l'intensité acoustique en 3 dimensions (c'était inatteignable dans l'état de l'art du fait du temps de mesure et de calcul, ce qui explique pourquoi D1 traite uniquement de 2 dimensions),
■ Détermination de la position de la source sonore
■ Pas de modification du maillage de mesure nécessaire en fonction du domaine de fréquences acoustiques ou de la direction de l'écoulement.

Par ailleurs, personne n'est encore parvenu à estimer tous les champs acoustiques en 3 dimensions dans un volume de taille macroscopique d'un fluide en écoulement, malgré l'intérêt que cela représente (lutte contre le bruit par identification des sources sonores ou mesure de l'effet de matériaux absorbants).

Dans une réalisation particulière du procédé, l'étape de calcul de la pression acoustique dans le domaine fréquentiel est réalisée avantageusement à partir de la formule suivante:

$$p = \rho_0 c_0 M_0 v_x^a - \frac{\rho_0 c_0^2}{\omega}\left[(M_0^2 - 1)\frac{\partial V_x^a}{\partial x} - \frac{\partial V_y^a}{\partial y} - \frac{\partial V_z^a}{\partial z}\right]$$

dans laquelle :

- $p$ est la transformée dans le domaine fréquentiel de la pression acoustique dans un volume macroscopique 36 ;
- $\rho_0$ est la masse volumique du fluide 2 dans le volume macroscopique 36;
- $c_0$ est la célérité du son dans le fluide 2 dans le volume macroscopique 36;
- $M_0$ est le nombre de Mach moyenné temporellement dans le volume macroscopique 36; le nombre de Mach est un nombre sans dimension qui exprime le rapport de la vitesse locale d'un fluide sur la vitesse du son dans ce même fluide (supposé dans le cas présent dans la direction x pour des raisons de simplification);
- $\omega$ est la pulsation associée à la fréquence d'intérêt du signal de référence ;
- $v_x^a$ est l'estimée, dans un volume de mesure 26, de la transformée dans le domaine fréquentiel de la composante spatiale selon la direction x de la vitesse du fluide générée par les ondes acoustiques ;
- $v_y^a$ est l'estimée, dans un volume de mesure 26, de la transformée dans le domaine fréquentiel de la composante spatiale selon la direction $y$ de la vitesse du fluide générée par les ondes acoustiques ;
- $v_z^a$ est l'estimée, dans un volume de mesure 26, de la transformée dans le domaine fréquentiel de la composante spatiale selon la direction z de la vitesse du fluide générée par les ondes acoustique.

La généralisation relative à une direction de vitesse d'écoulement différente de x est immédiate.
Dans une réalisation particulière, le procédé d'estimation de la pression acoustique est suivi de l'estimation de la moyenne de la pression acoustique dans un volume macroscopique plusieurs fois plus grand que le volume de mesure, les pressions acoustiques en différents points de ce volume macroscopique étant estimées grâce au procédé d'estimation.

Suivant des modes particuliers de réalisation, le procédé d'estimation comporte l'une ou plusieurs des caractéristiques suivantes :

- le calcul de corrélation est effectué entre les signaux de fluctuation et le signal de référence et en ce que l'étape de calcul de la corrélation est précédé des étapes suivantes :
- calcul d'un signal de vitesse moyenne à partir du signal de vitesse mesure;
- calcul d'un signal représentatif des fluctuations de vitesse du fluide, dit signal de fluctuation, à partir du signal de vitesse moyenne et du signal de vitesse mesurée, par soustraction du signal de vitesse moyenne au signal de vitesse mesurée ;
- calcul des interspectres entre le signal de référence et le signal de fluctuation ; lesdits interspectres caractérisant ladite corrélation dans chaque direction x, y et z.
- il comporte en outre les étapes suivantes :
- rééchantillonnage à pas constant du signal de fluctuation en et du signal de référence ;
- construction de signaux étalons sur la même base de temps que les signaux de référence et de fluctuation avant rééchantillonnage, puis correction des signaux rééchantillonnés, par exemple selon la méthode décrite aux étapes 54 et 56.
- il comporte en outre une étape d'estimation par segmentation.
- l'étape d'estimation comporte les étapes suivantes :
- calcul de chacun des modules $|v_x(f)|$, $|V_y(f)|$ et $|V_z(f)|$ et des phases à partir des formules suivantes :

$$|V_x(f)| = \sqrt{\frac{|G_{r,fx}|^2}{|\emptyset_{(r)}|}} \; ; \; |V_y(f)| = \sqrt{\frac{|G_{r,fy}|^2}{|\emptyset_{(r)}|}} \; ; \; |V_z(f)| = \sqrt{\frac{|G_{r,fz}|^2}{|\emptyset_{(r)}|}} \; ;$$

$$\varphi(V_x(f)) = \varphi(G_{r,f_x}) \; ; \; \varphi(V_y(f)) = \varphi(G_{r,f_y}) \; ; \; \varphi(V_z(f)) = \varphi(G_{r,f_z})$$

avec $\emptyset(r)$ autospectre du signal de référence

- calcul sous leur forme complexe des transformées dans le domaine fréquentiel des composantes spatiales de la vitesse acoustique à partir des modules et phases calculés ci-dessus :

$$V_x^a(f) = |V_x(f)| \exp(i\varphi(V_x(f))) \; ; V_y^a(f) = |V_y(f)| \exp(i\varphi(V_y(f)))$$

$$V_z^a(f) = |V_z(f)| \exp(i\varphi(V_z(f)))$$

L'invention a également pour objet un dispositif d'estimation de la pression acoustique dans un volume macroscopique d'un fluide selon la revendication 9.

L'invention a également pour objet un programme informatique comportant des instructions pour mettre en oeuvre le procédé mentionné ci-dessus lorsqu'elles sont exécutées par un ou plusieurs processeurs.

L'invention sera mieux comprise à la lecture de la description qui va suivre, donnée uniquement à titre d'exemple et faite en se référant aux dessins, sur lesquels :

- la figure 1 est un schéma du dispositif d'estimation selon l'invention ; et
- la figure 2 est un diagramme des étapes du procédé d'estimation de la pression acoustique générée par des ondes acoustiques selon l'invention.

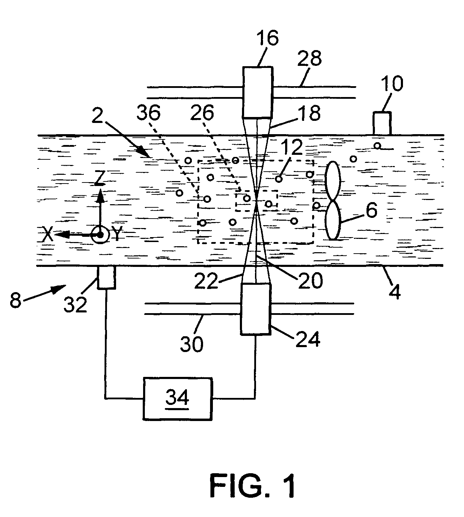

En référence à la figure 1, un fluide 2 s'écoule dans un conduit 4 aussi appelé veine comprenant une source d'ondes acoustiques 6, par exemple constituée par une pale, propre à générer des ondes acoustiques ayant un spectre fréquentiel stationnaire, c'est-à-dire décomposable en une somme de sinusoïdes à fréquence et amplitude constantes dans le temps.

Dans chaque direction x, y, z du conduit 4, la vitesse du fluide 2 peut être considérée comme étant la somme d'une vitesse moyenne du fluide, d'une vitesse de fluctuation du fluide générée par les ondes acoustiques et d'une vitesse de fluctuation du fluide non générée par les ondes acoustiques. Le procédé et le dispositif d'estimation 8 selon l'invention permet d'estimer la pression acoustique dans un volume macroscopique 36 du fluide 2. Cette pressions acoustique est générée par des ondes acoustiques.

A cet effet, le dispositif d'estimation 8 selon l'invention comprend un dispositif d'ensemencement 10 propre à distribuer dans le fluide 2 des particules 12, une source 16 de type laser, propre à émettre des faisceaux lumineux de longueurs d'ondes différentes pour les trois voies de mesure 18, 20, 22 (1 voie de mesure par composante spatiale) et un détecteur 24 apte à réceptionner les faisceaux lumineux diffusés par les particules 12, en mouvement dans le fluide 2.

Selon l'invention, il est considéré que le fluide 2 présente une vitesse moyenne non nulle selon la direction x. Le fluide 2 est transparent vis-à-vis des longueurs d'ondes des faisceaux lumineux des voies 18, 20, 22. Les faisceaux lumineux sont émis selon des directions différentes de manière à ce que leur croisement constitue un volume de mesure unique prédéfini 26 du fluide en mouvement dans le conduit 4. Ce volume de mesure 26 présente des dimensions, par exemple, égales à 100μm x 100μm x 100μm.

Les particules 12 sont aptes à se déplacer à la vitesse du fluide 2. Elles sont choisies de manière à diffuser les longueurs d'ondes des faisceaux lumineux des voies 18, 20, 22. Elles sont, par exemple, constituées par de l'encens, du MgO, de l'aérosil, ou de l'huile.

La source 16 et le détecteur 24 sont montés coulissants sur des rails qui s'étendent selon les directions x, y, z d'un repère orthonormé. Sur la figure 1, seul deux rails 28, 30 qui s'étendent selon la direction x, ont été représentés. Ils sont fixés de part et d'autre du conduit 4.

Le dispositif d'estimation 8 comprend, en outre, un ou plusieurs capteurs 32, de type microphone ou tachymètre, et une unité de calcul 34 connectée au détecteur 24 et au capteur 32.

Le capteur 32 est apte à mesurer un signal de référence $r(t)$ corrélé avec les ondes acoustiques. La corrélation entre deux variables est définie comme l'intensité de la liaison qui peut exister entre ces variables. Le capteur 32 est disposé hors de l'écoulement du fluide 2, par exemple contre la paroi extérieure du conduit 4. Le signal de référence $r(t)$ présente un rapport signal acoustique sur bruit de turbulence supérieur à 10 dB.

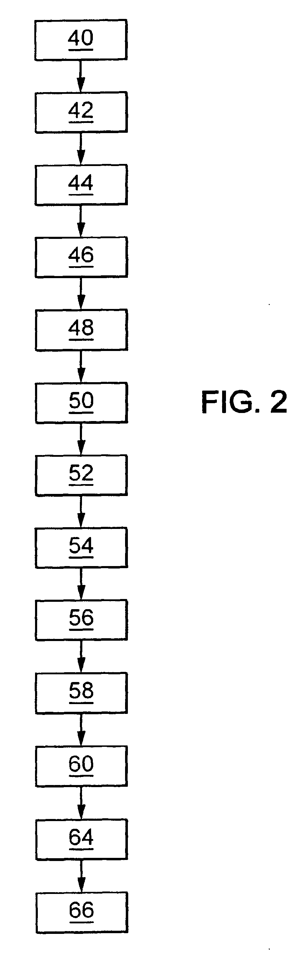

En référence à la figure 2, le procédé d'estimation de la pression acoustique débute par une étape 40 d'ensemencement du fluide 2 dans lequel les ondes acoustiques se propagent. Cet ensemencement est réalisé de manière aléatoire.

Au cours d'une étape 42, le capteur 32 mesure un signal, dit signal de référence $r(t)$ corrélé avec les ondes acoustiques. En pratique, le capteur 32 mesure le bruit généré par la source 6. Ce bruit est représentatif des ondes acoustiques générées par la source 6.

Au cours d'une étape 44, la source 16 émet les faisceaux lumineux des voies 18, 20, 22 vers le volume de mesure 26 pendant une période de temps de mesure dépendant du nombre de particules traversant le volume de mesure 26 à chaque instant $t_k$ validées par l'unité de calcul 34 (critère de validation variable selon le processeur de signaux employé). Le détecteur 24 détecte les faisceaux lumineux réfléchis par une succession de particules 12, et transmet un signal représentatif de ceux-ci à l'unité de calcul 34. A partir de ce signal, l'unité de calcul 34 calcule des valeurs de vitesse $v_x(t_k)$, $v_y(t_k)$, $v_z(t_k)$ selon les directions x, y, z, des particules 12 traversant le volume de mesure 26, où $t_k$ marque l'instant de passage de la kième particule 12 à travers le volume de mesure 26 durant la période de temps de mesure. Le signal de référence $r(t)$ est mesuré à ces instants $t_k$.

Comme les particules se succèdent à des intervalles de temps aléatoires, les intervalles entre les instants $t_k$ sont non constants. Cette méthode d'estimation de valeurs de vitesse est couramment appelée Vélocimétrie Laser Doppler à franges 3D.

Au cours d'une étape 46, les valeurs de vitesses des particules $v_x(t_k)$, $v_y(t_k)$, $v_z(t_k)$, mesurées au cours le l'étape 44 sont filtrées de manière à exclure les valeur de vitesse aberrantes. Ce filtrage est, par exemple, réalisé, dans chaque direction x, y, z, de manière statistique par suppression des valeurs de vitesse situées à plus de six écarts-type de la valeur moyenne de l'ensemble des valeurs de vitesse dans la direction correspondante, mesurées au cours de l'étape 44. Puis, l'unité de calcul 34 définit pour chaque direction x, y, z un signal de vitesse $v_x(t)$, $v_y(t)$, $v_z(t)$ passant par les valeurs de vitesses $v_x(t_k)$, $v_y(t_k)$, $v_z(t_k)$, issues de l'étape de filtrage 46. Ces signaux de vitesse $v_x(t_k)$, $v_y(t_k)$, $v_z(t_k)$ des particules sont assimilés à des signaux de vitesse du fluide 2 puisque les particules 12 ont été choisies de manière à se déplacer à la vitesse du fluide 2.

Au cours d'une étape 48, l'unité de calcul 34 calcule les vitesses moyennes $\overline{v_x}, \overline{v_y}, \overline{v_z}$ du fluide selon les directions x, y, z.

Au cours d'une étape 50, l'unité de calcul 34 définit pour chaque direction x, y, z des signaux, dits signaux de fluctuation $f_x(t_k)$ $f_y(t_k)$ $f_z(t_k)$, pour chaque direction x, y, z en soustrayant aux signaux de vitesse $v_x(t)$, $v_y(t)$, $v_z(t)$, la vitesse

moyenne $\overline{v}_x$, $\overline{v}_y$, $\overline{v}_z$ respective à chaque direction calculée au cours de l'étape 48.

Au cours d'une étape 52, les signaux de fluctuation $f_x(t_k)$ $f_y(t_k)$ $f_z(t_k)$ sont rééchantillonnés à pas constant après interpolation, par exemple par une méthode de bloqueur linéaire. La fréquence de rééchantillonnage est choisie sensiblement égale au nombre de particules 12 observées divisé par la durée d'observation.

$$f_x(t_k), f_y(t_k), f_z(t_k) \Rightarrow f_x(t_l), f_y(t_l), f_z(t_l)$$

Au cours d'une étape 54, un signal étalon $e(t_k)$ est construit sur la même base de temps que les instants $\{t_k\}$ auxquels les vitesses des particules 12 ont été déterminées au cours de l'étape 44. Ce signal étalon $e(t_k)$ est une sinusoïde d'amplitude unitaire et de fréquence égale à l'une des fréquences $f_n$ d'intérêt dans le signal de référence. Puis, le signal étalon $e(t_k)$ ainsi construit est rééchantillonné à la même fréquence de rééchantillonnage que les signaux de fluctuation $f_x(t_k)$, $f_y(t_k)$ $f_z(t_k)$ et que le signal de référence au cours de l'étape 52.

Pour chaque fréquence $f_n$ considérée, on calcule la variance V(e) et l'autospectre Ø(e) du signal étalon rééchantillonné, où l'autospectre est défini comme la transformée de Fourier de la fonction d'autocorrélation d'un signal.

$$\emptyset(e) = \mathscr{F}\{E(\tau)\}$$

Les erreurs induites par le rééchantillonnage des signaux de fluctuation $f_x(t_l)$ $f_y(t_l)$, $f_z(t_l)$ et du signal de référence sont compensées par multiplication de la transformée de Fourier de ces signaux rééchantillonnés, par leur facteur correctif C relatif à la fréquence d'intérêt. Chaque facteur correctif est défini par la racine carrée du rapport entre la variance V(e) du signal étalon par l'autospectre Ø(e) du signal étalon.

$$C(fn) = \sqrt{\frac{V(e)}{\emptyset(e)}}$$

Au cours d'une étape 56, une boucle sur l'étape 54 est réalisée en prenant tour à tour les différentes fréquences $f_n$ d'intérêt du signal de référence.

Les étapes 54 et 56 de correction des erreurs liées au rééchantillonnage sont facultatives. Ces étapes de correction n'existent pas dans l'état de l'art le plus proche. Cette correction est encore plus utile en 3 dimensions qu'en 2 dimensions. En effet, cette erreur augmente avec la réduction de la cadence d'échantillonnage en 3 dimensions, celle-ci étant due à la nécessaire coïncidence, à l'instant de mesure, des particules d'ensemencement dans les 3 volumes de mesure 26 (un pour chaque dimension). L'erreur induite avait pour effet de réduire fortement la bande de fréquence des signaux acoustiques pouvant être traités. Sans correction, les cadences d'échantillonnage pourraient être différentes selon les points de mesure et donc les erreurs varriraient en fonction des points de mesure, ce qui rendrait caduque la méthode d'extraction de la pression à partir de ces points de mesure.

Cette variante permet que la perte de précision de l'estimation de l'intensité acoustique puisse en partie être compensée par une légère augmentation du nombre de points de mesure.

En variante, les étapes 52 à 56 sont remplacées par une estimation par segmentation généralement appelée en anglais méthode de « slotting» décrite dans les documents suivants "Digital estimation of turbulence power spectra from burst counter LDV data", de W.T Mayo, M.T. Shay, & S. Riter ; dans Proceedings 2d International Workshop on Laser Velocimetry, Purdue University, Vol 1, pp 16-26, 1974 ; et "Efficient estimation of power spectral densitry from laser Doppler anemometer data" de H. Nobach, E. Müller & C. Tropea ; dans Experiments in Fluids, vol 24 (5/6), pp 499-509, 1998.

Au cours d'une étape 58, l'unité de calcul 34 calcule les transformées de Fourier des intercorrélations entre le signal de référence $r(t)$ et chacun des signaux de fluctuation $f_x(t_l)$, $f_y(t_l)$ et $f_z(t_l)$. Ces transformés de Fourier sont appelées ci- après interspectres $G_{r.fx}$, $G_{r.fy}$ et $G_{r.fz}$ :

$$G_{r.fx} = \langle R*(fx), F(fx) \rangle$$

$$G_{r,fy} = \langle R*(fy), F(fy) \rangle$$

$$G_{r,fz} = \langle R*(fz), F(fz) \rangle$$

Cette opération permet de rejeter des signaux de fluctuation, les fluctuations non liées aux ondes acoustiques.

Les transformées de Fourier des composantes spatiales de la vitesse d'un fluide générées par les ondes acoustiques peuvent être calculées sous forme complexe. Tout nombre complexe pouvant être défini par une phase et un module, les phases et modules des interspectres sont calculés comme suit :

$$V_x^a(f) = |V_x(f)| \exp(i\varphi(V_x(f)))$$

$$V_y^a(f) = |V_y(f)| \exp(i\varphi(V_y(f)))$$

$$V_z^a(f) = |V_z(f)| \exp(i\varphi(V_z(f)))$$

Avec :

$$\varphi(V_x(f)) = \varphi(G_{r,fx}), \quad \varphi(V_y(f)) = \varphi(G_{r,fy}) \text{ et } \varphi(V_z(f)) = \varphi(G_{r,fz})$$

$$|V_x(f)| = \sqrt{\frac{|G_{r,fx}|^2}{|\varnothing(r)|}}, \quad |V_y(f)| = \sqrt{\frac{|G_{r,fy}|^2}{|\varnothing(r)|}} \text{ et } |V_z(f)| = \sqrt{\frac{|G_{r,fz}|^2}{|\varnothing(r)|}}$$

avec $\varnothing(r)$ autospectre du signal de référence

Au cours d'une étape 60, les phases des interspectres $\varphi(G_{r,fx})$, $\varphi(G_{r,fy})$ et $\varphi(G_{r,fz})$ ainsi que les modules , $|V_x(f)|$, $|V_y(f)|$ et $|V_z(f)|$ sont calculés. Puis, l'unité de calcul 34 calcule les nombres complexes $v_x^a(f)$, $v_y^a(f)$ et $v_z^a(f)$ ainsi constitués pour obtenir, dans le domaine fréquentiel, les composantes spatiales $v_x^a, v_y^a, v_z^a$, selon les directions x, y et z de la vitesse d'un fluide, générées par les ondes acoustiques.

Au cours d'une étape 64, l'unité de calcul 34 calcule la pression acoustique $p$ à partir des des composantes spatiales $v_x^a, v_y^a, v_z^a$ estimées, avec un modèle de propagation aéroacoustique en 3 dimensions, comme par exemple l'équation d'Euler en trois dimensions. Dans la formule ci-dessous il a été considéré que les composantes de vitesses moyennes selon les directions y et z étaient négligeables devant la composante selon la direction x.

$$p = \rho_0 c_0 M_0 V_x^a - \frac{\rho_0 c_0^2}{\omega}\left[(M_0^2 - 1)\frac{\partial v_x^a}{\partial x} - \frac{\partial v_y^a}{\partial y} - \frac{\partial v_z^a}{\partial z}\right]$$

dans laquelle :

- $p$ est la transformée dans le domaine fréquentiel de la pression acoustique dans un volume macroscopique 36 ;
- $p_0$ est la masse volumique du fluide 2 dans le volume macroscopique 36;
- $c_0$ est la célérité du son dans le fluide 2 dans le volume macroscopique 36;
- $M_0$ est le nombre de Mach moyenné temporellement dans le volume macroscopique 36; le nombre de Mach est un nombre sans dimension qui exprime le rapport de la vitesse locale d'un fluide sur la vitesse du son dans ce même fluide (supposé dans le cas présent dans la direction x pour des raisons de simplification);
- $\omega$ est la pulsation associée à la fréquence d'intérêt du signal de référence ;
- $v_x^a$ est l'estimée, dans un volume de mesure 26, de la transformée dans le domaine fréquentiel de la composante spatiale selon la direction $x$ de la vitesse du fluide générée par les ondes acoustiques ;
- $v_y^a$ est l'estimée, dans un volume de mesure 26, de la transformée dans le domaine fréquentiel de la composante spatiale selon la direction $y$ de la vitesse du fluide générée par les ondes acoustiques ;
- $v_z^a$ est l'estimée, dans un volume de mesure 26, de la transformée dans le domaine fréquentiel de la composante spatiale selon la direction z de la vitesse du fluide générée par les ondes acoustique.

Il est possible d'estimer les composantes spatiales $v_x^a, v_y^a, v_z^a$ de la vitesse du fluide générées par les ondes acoustiques dans différents volumes de mesure 26 par déplacement de la source 16 et du détecteur 24 et répétition des étapes 40 à 64 pour chaque volume de mesure. Cela permet d'obtenir une cartographie de la vitesse acoustique dans le conduit 4.

Il est également possible de réaliser des moyennes des valeurs des composantes spatiales $v_x^a, v_y^a, v_z^a$ de la vitesse du fluide générées par les ondes acoustiques pour plusieurs volumes de mesures 26 voisins définissant un volume macroscopique 36 de taille similaire à un capteur microphonique de taille usuelle pour la gamme de fréquence choisie.

Au cours d'une étape 66, l'unité de calcul 34 calcule la moyenne spatiale des pressions acoustiques locales, obtenues à l'étape 64, ceci dans le volume macroscopique 36.

Tout comme pour les composantes spatiales $v_x^a, v_y^a, v_z^a$ de la vitesse, la pression acoustique $p$ est ensuite estimée, par l'unité de calcul 34, dans différents volumes de mesure 26 d'un volume macroscopique 36, ce qui permet alors à l'unité de calcul 34 de calculer la moyenne spatiale des pressions acoustiques dans le volume macroscopique 36. Le volume macroscopique 36 est au moins égal à deux fois le volume de mesure 26. Plus on augmente la taille du volume macroscopique 36, meilleure est l'estimation de la pression.

Une cartographie des pressions acoustiques, éventuellement moyennées, du conduit 4 est alors possible par répétition du procédé d'estimation pour différents volumes de mesure 26. Cette cartographie représente un maillage de l'intérieur du conduit.

Ceci permet ensuite d'estimer la géométrie de fronts d'ondes acoustiques, et d'en déduire, compte tenu des lois de propagations aéroacoustiques, la position des sources sonores.

Avantageusement, ce procédé d'estimation de la pression acoustique $p$ est non intrusif et à haute résolution spatiale. Il permet ainsi, par exemple, de mesurer cette pression acoustique dans la couche limite d'une paroi dans le conduit 4.

Il est également possible d'estimer l'intensité acoustique I dans un ou plusieurs volumes de mesures 26 donnés, à partir de la formule suivante dans laquelle il a été considéré que les composantes de vitesses moyennes selon les directions y et z étaient négligeables devant la composante selon la direction x:

$$\bar{I} = \frac{1}{2}\mathrm{Re}\left( p\left(\bar{V}^a\right)^* + \left(M_0^2 . V_x^a\right)p^* \bar{e}_x + p_0 c_0 \left(M_0 . V_x^a\right)\left(\bar{V}^a\right)^* + M_0 \left(\frac{pp^*}{p_0 c_0}\right)\bar{e}_x \right)$$

dans laquelle :

- Re est la partie réelle ;

- p est la pression acoustique ; - $\vec{v}^a$ est le vecteur comprenant les composantes $v_x^a$, $v_y^a$, $v_z^a$ ;

- $v_x^a$ est la composante spatiale selon la direction $x$ de la vitesse du fluide générée par les ondes acoustiques ;
- $M_0$ est le nombre de Mach moyenné temporellement;
- $\rho_0$ est la masse volumique du fluide ;
- $c_0$ est la célérité du son dans le fluide en mouvement ;
- $\vec{e}_x$ est le vecteur unitaire dans la direction x ;
- * est le conjugué du complexe considéré.

La mesure de l'intensité acoustique en différents points du fluide 2 permet de caractériser les propriétés acoustiques d'un système comprenant un écoulement, une ou plusieurs sources acoustiques et des matériaux absorbants acoustiques, ainsi que de sous-ensembles de ce système.

L'invention concerne également un programme informatique comportant des instructions pour mettre en oeuvre les étapes 40 à 64 du procédé d'estimation décrit ci-dessus, lorsqu'elles sont exécutées par un ou plusieurs processeurs.

## Revendications

1. Procédé d'estimation de la pression acoustique dans un volume macroscopique (36) d'un fluide (2), ledit procédé étant mis en oeuvre par un dispositif d'estimation (8) comprenant un dispositif d'ensemencement (10) propre à distribuer dans le fluide (2) des particules (12), une source (16) propre à émettre des faisceaux lumineux de longueurs d'ondes différentes déterminées, et un détecteur (24) apte à réceptionner lesdits faisceaux lumineux diffusés par les particules (12) en mouvement dans le fluide (2), chaque dit faisceau lumineux étant associé à une voie de mesure (18, 20, 22) dudit détecteur (24) ; ladite pression acoustique étant générée par des ondes acoustiques ; les ondes acoustiques ayant un spectre fréquentiel stationnaire, ledit fluide (2) étant en mouvement et transparent pour lesdits faisceaux, le procédé comportant les étapes suivantes :

    - ensemencement (40) du fluide (2) par des particules (12) aptes à diffuser

    lesdits faisceaux lumineux, lesdites particules (12) étant propres à se déplacer à la vitesse du fluide (2) ;

    - mesure (42), par au moins un capteur (32), d'au moins un signal, dit signal de référence ($r(t)$), corrélé avec les ondes acoustiques ;
    - pour chaque direction (x, y, z) d'un repère

        ■ émission (44) de dits faisceaux lumineux par une source (16) et réception, par le détecteur (24), selon lesdites voies de mesure (18, 20, 22), de faisceaux lumineux diffusés par les particules (12) ;
        ■ mesure (44) d'un signal de vitesse ($v_x(t)$, $v_y(t)$, $v_z(t)$) des particules (12) dans un volume de mesure prédéfini (26), par Vélocimétrie Laser Doppler à franges, à partir desdits faisceaux lumineux diffusés ;
        ■ calcul (58) de la corrélation entre le signal de vitesse mesuré ($v_x(t)$, $v_y(t)$, $v_z(t)$) et le signal de référence mesuré ($r(t)$) ;

        ■ estimation (60) de la composante spatiale de la vitesse $\left(v_x^a, v_y^a, v_z^a\right)$ du fluide (2) dans ladite direction (x, y, z), générée par les ondes acoustiques, à partir de ladite corrélation ;

    - calcul (64) de la pression acoustique dans un volume macroscopique (36) à partir des composantes spatiales estimées de la vitesse du fluide,

    **caractérisé en ce que** la mesure (44) du signal de vitesse ($v_x(t)$, $v_y(t)$, $v_z(t)$ des particules (12) par Vélocimétrie Laser Doppler à franges, est effectuée selon trois directions-x, y, z différentes et **en ce que** l'étape de calcul de la pression acoustique est réalisée à partir des équations d'Euler en trois dimensions.

2. Procédé d'estimation selon la revendication 1, **caractérisé en ce que** le calcul de corrélation est effectué entre les signaux de fluctuation et le signal de référence, et **en ce que** l'étape de calcul de la corrélation (58) est précédé des étapes suivantes :

- calcul (48) d'un signal de vitesse moyenne ($\bar{v}_x$, $\bar{v}_y$, $\bar{v}_z$) à partir du signal de vitesse mesurée ($v_x(t)$, $v_y(t)$, $v_z(t)$);
- calcul (50) d'un signal représentatif des fluctuations de vitesse du fluide, dit signal de fluctuation ($f_x(t)$, $f_y(t)$, $f_z(t)$), à partir du signal de vitesse moyenne ($\bar{v}_x$, $\bar{v}_y$, $\bar{v}_z$) et du signal de vitesse mesurée ($v_x(t)$, $v_y(t)$, $v_z(t)$), par soustraction du signal de vitesse moyenne au signal de vitesse mesurée ;
- calcul (58) des interspectres ($G_{r,fx}$, $G_{r,fy}$, $G_{r,fz}$) entre le signal de référence ($r(t)$) et le signal de fluctuation ($f_x(t)$, $f_y(t)$, $f_z(t)$); lesdits interspectres caractérisant ladite corrélation dans chaque direction x, y et z.

3. Procédé d'estimation selon la revendication 2, **caractérisé en ce qu'**il comporte en outre l'étape suivante :

- rééchantillonnage (52) à pas constant du signal de fluctuation ($f_x(t_k)$, $f_y(t_k)$, $f_z(t_k)$) en ($f_x(t_l)$, $f_y(t_l)$, $f_z(t_l)$) et du signal de référence ($r(t_l)$).

4. Procédé d'estimation selon la revendication 3, **caractérisé en ce qu'**il comporte en outre l'étape suivante :

- construction (54) et (56) de signaux étalons ($e(t_k)$) sur la même base de temps $\{t_k\}$ que les signaux de référence et de fluctuation avant rééchantillonnage, puis correction des signaux rééchantillonnés.

5. Procédé d'estimation selon l'une quelconque des revendications 1 à 2, **caractérisé en ce qu'**il comporte en outre une étape d'estimation par segmentation.

6. Procédé d'estimation selon l'une quelconque des revendications précédentes, **caractérisé en ce que** l'étape d'estimation (60), comporte les étapes suivantes :

- calcul de chacun des modules $|v_x(f)|$, $|V_y(f)|$ et $|V_z(f)|$ et des phases à partir des formules suivantes :

$$|V_x(f)| = \sqrt{\frac{|G_{r,fx}|^2}{|\varnothing_{(r)}|}} \; ; \; |V_y(f)| = \sqrt{\frac{|G_{r,fy}|^2}{|\varnothing_{(r)}|}} \; ; \; |V_z(f)| = \sqrt{\frac{|G_{r,fz}|^2}{|\varnothing_{(r)}|}} \; ;$$

$$\varphi(V_x(f)) = \varphi(G_{r,f_x}) \; ; \; \varphi(V_y(f)) = \varphi(G_{r,f_y}) \; ; \; \varphi(V_z(f)) = \varphi(G_{r,f_z})$$

avec $\varnothing(r)$ autospectre du signal de référence
- calcul sous leur forme complexe des transformées dans le domaine fréquentiel des composantes spatiales de la vitesse acoustique à partir des modules et phases calculés ci-dessus :

$$V_x^a(f) = |V_x(f)| \exp(i\varphi(V_x(f))) \; ; V_y^a(f) = |V_y(f)| \exp(i\varphi(V_y(f)))$$

$$V_z^a(f) = |V_z(f)| \exp(i\varphi(V_z(f)))$$

7. Procédé d'estimation selon l'une quelconque des revendications précédentes, **caractérisé en ce que** l'étape de calcul (64) de la pression acoustique dans le domaine fréquentiel étant réalisée à partir de la formule suivante:

$$p = \rho_0 c_0 M_0 v_x^a - \frac{\rho_0 c_0^2}{\omega}\left[(M_0^2 - 1)\frac{\partial V_x^a}{\partial x} - \frac{\partial V_y^a}{\partial y} - \frac{\partial V_z^a}{\partial z}\right]$$

dans laquelle :

- $p$ est la transformée dans le domaine fréquentiel de la pression acoustique dans le volume macroscopique (36) ;
- $\rho_0$ est la masse volumique du fluide 2 dans le volume macroscopique (36);
- $c_0$ est la célérité du son dans le fluide 2 dans le volume macroscopique (36);
- $M_0$ est le nombre de Mach moyenné temporellement dans le volume macroscopique 36; le nombre de Mach est un nombre sans dimension qui exprime le rapport de la vitesse locale d'un fluide sur la vitesse du son dans ce même fluide (supposé dans le cas présent dans la direction x pour des raisons de simplification);
- $\omega$ est la pulsation associée à la fréquence d'intérêt du signal de référence ;

- $v_x^a$ est l'estimée, dans un volume de mesure (26), de la transformée dans le domaine fréquentiel de la composante spatiale selon la direction x de la vitesse du fluide générée par les ondes acoustiques ;

- $v_y^a$ est l'estimée, dans un volume de mesure (26), de la transformée dans le domaine fréquentiel de la composante spatiale selon la direction y de la vitesse du fluide générée par les ondes acoustiques ;

- $v_z^a$ est l'estimée, dans un volume de mesure (26), de la transformée dans le domaine fréquentiel de la composante spatiale selon la direction z de la vitesse du fluide générée par les ondes acoustique.

8. Procédé d'estimation selon l'une quelconque des revendications précédentes, **caractérisé en ce qu'**il comporte une étape d'estimation (66) de la moyenne de la pression dans un volume macroscopique (36) au moins deux fois plus grand que le volume de mesure (26), les pressions acoustiques en différents points de ce volume macroscopique étant estimées grâce au procédé d'estimation.

9. Dispositif d'estimation (8) de la pression acoustique dans un volume macroscopique (36) d'un fluide (2), ladite pression acoustique étant générée par des ondes acoustiques ; les ondes acoustiques ayant un spectre fréquentiel stationnaire, ledit dispositif (8) comportant :

- au moins un dispositif d'ensemencement (10) apte à ensemencer le fluide (2) par des particules (12) aptes à diffuser lesdits faisceaux lumineux, lesdites particules (12) étant propres à se déplacer à la vitesse du fluide (2);
- au moins un capteur (32) propre à mesurer au moins un signal, dit signal de référence ($r(t)$), corrélé avec les ondes acoustiques ;
- au moins une source (16) propre à générer des faisceaux lumineux aux longueurs d'onde différentes déterminées pour les voies de mesures (18, 20, 22) ; ledit fluide (2) étant en mouvement et transparent pour les faisceaux des voies (18, 20, 22) de longueurs d'onde déterminées; lesdits faisceaux lumineux se croisant dans un volume de mesure (26) du fluide (2) ;
- au moins un détecteur (24) propre à réceptionner lesdits faisceaux lumineux diffusés par lesdites particules (12), chaque dit faisceau lumineux étant associé à une voie de mesure (18, 20, 22) dudit détecteur (24) ;
- au moins une unité de calcul (34) apte à calculer,
- pour chaque direction (x, y, z) d'un repère :

  ■ un signal de vitesse ($v_x(t)$, $v_y(t)$, $v_z(t)$) desdites particules dans le volume de mesure (26) par Vélocimétrie Laser Doppler à franges, à partir desdits faisceaux lumineux diffusés vers lesdites voies de mesure (18, 20, 22),
  ■ la corrélation entre le signal de vitesse mesuré ($v_x(t)$, $v_y(t)$, $v_z(t)$ et le signal de référence mesuré ($r(t)$),

  ■ la composante spatiale $\left( v_x^a, v_y^a, v_z^a \right)$ de la vitesse du fluide générée par les ondes acoustiques, à partir de ladite corrélation,

- la pression acoustique dans un volume macroscopique (36) à partir des composantes spatiales estimées de la vitesse du fluide,

**caractérisé en ce que** l'unité de calcul (34) est apte à calculer :

- le signal de vitesse ($v_x(t)$, $v_y(t)$, $v_z(t)$) des particules (12) par Vélocimétrie Laser Doppler à franges, selon trois directions différentes x, y, z ;
- la pression acoustique à partir des équations d'Euler en trois Z dimensions.

**10.** Programme informatique, **caractérisé en ce qu'**il comporte des instructions pour mettre en oeuvre le procédé selon l'une quelconque des revendications 1 à 8, lorsqu'elles sont exécutées par un ou plusieurs processeurs.

**Patentansprüche**

**1.** Verfahren zur Schätzung des akustischen Drucks in einem makroskopischen Volumen (36) eines Fluids (2), wobei das Verfahren durch eine Schätzungsvorrichtung (8) umgesetzt wird, umfassend eine Impfvorrichtung (10), die geeignet ist, im Fluid (2) Partikel (12) zu verteilen, eine Quelle (16), die geeignet ist, Lichtstrahlen mit verschiedenen bestimmten Wellenlängen zu emittieren, und einen Detektor (24), der die durch die im Fluid (2) in Bewegung befindlichen Partikel (12) verbreiteten Lichtstrahlen empfangen kann, wobei jeder Lichtstrahl einem Messpfad (18, 20, 22) des Detektors (24) zugeordnet ist; wobei der akustische Druck durch akustische Wellen erzeugt wird; wobei die akustischen Wellen ein stationäres Frequenzspektrum aufweisen, wobei sich das Fluid (2) in Bewegung befindet und für die Strahlen transparent ist, wobei das Verfahren folgende Schritte aufweist:

- Impfung (40) des Fluids (2) mit Partikeln (12), welche die Lichtstrahlen verbreiten können, wobei die Partikel (12) geeignet sind, sich mit der Geschwindigkeit des Fluids (2) zu bewegen;
- Messung (42) zumindest eines als Referenzsignal ($r(t)$) bezeichneten, mit den akustischen Wellen korrelierten Signals durch zumindest einen Sensor (32);
- für jede Richtung (x, y, z) eines Koordinatensystems:

■ Emission (44) von Lichtstrahlen durch eine Quelle (16) und Empfang von durch die Partikel (12) verbreiteten Lichtstrahlen durch den Detektor (24) entlang der Messpfade (18, 20, 22);
■ Messung (44) eines Geschwindigkeitssignals ($v_x(t)$, $vy(t)$, $v_z(t)$) der Partikel (12) in einem vordefinierten Messvolumen (26) durch Laser-Doppler-Anemometrie anhand der verbreiteten Lichtstrahlen;
■ Berechnung (58) der Korrelation zwischen dem gemessenen Geschwindigkeitssignal ($v_x(t)$, $v_y(t)$, $v_z(t)$) und dem gemessenen Referenzsignal ($r(t)$);
■ Schätzung (60) der räumlichen Komponente der durch die akustischen Wellen erzeugten Geschwindigkeit $\left( v_x^a, v_y^a, v_z^a \right)$ des Fluids (2) in der Richtung (x, y, z) anhand der Korrelation;

■ Berechnung (64) des akustischen Drucks in einem makroskopischen Volumen (36) anhand der geschätzten räumlichen Komponenten der Geschwindigkeit des Fluids,

**dadurch gekennzeichnet, dass** die Messung (44) des Geschwindigkeitssignals ($v_x(t)$, $v_y(t)$, $v_z(t)$) der Partikel (12) durch Laser-Doppler-Anemometrie in drei unterschiedlichen Richtungen x, y, z erfolgt und dass der Schritt der Berechnung des akustischen Drucks anhand der Eulerschen Gleichungen in drei Dimensionen ausgeführt wird.

**2.** Schätzungsverfahren nach Anspruch 1, **dadurch gekennzeichnet, dass** die Berechnung der Korrelation zwischen den Fluktuationssignalen und dem Referenzsignal erfolgt und dass dem Schritt der Berechnung der Korrelation (58) folgende Schritte vorausgehen:

- Berechnung (48) eines Durchschnittsgeschwindigkeitssignals ($\overline{v}_x$, $\overline{v}<$, $\overline{v}_z$) anhand des gemessenen Geschwindigkeitssignals ($v_x(t)$, $v_y(t)$, $v_z(t)$);
- Berechnung (50) eines als Fluktuationssignal ($f_x(t)$, $f_y(t)$, $f_z(t)$) bezeichneten Signals, das für die Geschwindigkeitsfluktuationen des Fluids repräsentativ ist, anhand des Durchschnittsgeschwindigkeitssignals ($\overline{v}_x$, $\overline{v}_<$, $\overline{v}_z$) und des gemessenen Geschwindigkeitssignals ($v_x(t)$, $v_y(t)$, $v_z(t)$) durch Subtraktion des Durchschnittsgeschwindigkeitssignals vom gemessenen Geschwindigkeitssignal;
- Berechnung (58) der Interspektren ($G_{r,fx}$, $G_{r,fy}$, $G_{r,fz}$) zwischen dem Referenzsignal ($r(t)$) und dem Fluktuationssignal ($f_x(t)$, $f_y(t)$, $f_z(t)$), wobei die Interspektren die Korrelation in jeder Richtung x, y und z kennzeichnen.

**3.** Schätzungsverfahren nach Anspruch 2, **dadurch gekennzeichnet, dass** es ferner den folgenden Schritt beinhaltet:

- mit konstanter Schrittweite Wiederabtastung (52) des Fluktuationssignals ($f_,(t_k)$, $f_y(t_k)$ $f_z(t_k)$) in ($f_x(t_l)$, $f_y(t_l)$, $f_z(t_l)$) und des Referenzsignals ($r(t_l)$).

**4.** Schätzungsverfahren nach Anspruch 3, **dadurch gekennzeichnet, dass** es ferner den folgenden Schritt beinhaltet:

- Aufbau (54) und (56) von Eichsignalen ($e(t_k)$) auf derselben Zeitbasis $\{t_k\}$ wie die Referenzsignale und die Fluktuationssignale vor der Wiederabtastung, anschließend Korrektur der wiederabgetasteten Signale.

5. Schätzungsverfahren nach einem der Ansprüche 1 bis 2, **dadurch gekennzeichnet, dass** es ferner einen Schritt der Schätzung durch Segmentierung umfasst.

6. Schätzungsverfahren nach einem der vorangehenden Ansprüche, **dadurch gekennzeichnet, dass** der Schätzungsschritt (60) die folgenden Schritte beinhaltet:

- Berechnung jedes der Module $|v_x(f)|$, $|V_y(f)|$ et $|V_z(f)|$ und der Phasen anhand der folgenden Formeln:

$$|V_x(f)| = \sqrt{\frac{\left|G_{r,f_x}\right|^2}{\left|\emptyset_{(r)}\right|}} \;\; ; \;\; |V_y(f)| = \sqrt{\frac{\left|G_{r,f_y}\right|^2}{\left|\emptyset_{(r)}\right|}} \;\; ; \;\; |V_z(f)| = \sqrt{\frac{\left|G_{r,f_z}\right|^2}{\left|\emptyset_{(r)}\right|}} \;\; ;$$

$$\varphi(V_x(f)) = \varphi(G_{r,f_x}) \;\; ; \;\; \varphi(V_y(f)) = \varphi(G_{r,f_y}) \;\; ; \;\; \varphi(V_z(f)) = \varphi(G_{r,f_z})$$

mit $\emptyset(r)$ = Autospektrum des Referenzsignals;
- Berechnung der Transformierten im Frequenzbereich der räumlichen Komponenten der akustischen Geschwindigkeit in ihrer komplexen Form anhand der vorstehend berechneten Module und Phasen:

$$V_x^a(f) = |V_x(f)| \exp(i\varphi(V_x(f))) \;\; ; \; V_y^a(f) = |V_y(f)| \exp(i\varphi(V_y(f)))$$

$$V_z^a(f) = |V_z(f)| \exp(i\varphi(V_z(f)))$$

7. Schätzungsverfahren nach einem der vorangehenden Ansprüche, **dadurch gekennzeichnet, dass** der Schritt der Berechnung (64) des akustischen Drucks im Frequenzbereich anhand der folgenden Formel ausgeführt wird:

$$p = \rho_0 c_0 M_0 v_x^a - \frac{\rho_0 c_0^2}{\omega}\left[(M_0^2 - 1)\frac{\partial V_x^a}{\partial x} - \frac{\partial V_y^a}{\partial y} - \frac{\partial V_z^a}{\partial z}\right]$$

wobei:

- $p$ die Transformierte im Frequenzbereich des akustischen Drucks im makroskopischen Volumen (36) ist;
- $p_0$ die Dichte des Fluids 2 im makroskopischen Volumen (36) ist;
- $c_0$ die Geschwindigkeit des Schalls im Fluid 2 im makroskopischen Volumen (36) ist;
- $M_0$ die zeitlich gemittelte Mach-Zahl im makroskopischen Volumen (36) ist; wobei die Mach-Zahl eine dimensionslose Zahl ist, die das Verhältnis der lokalen Geschwindigkeit eines Fluids zur Geschwindigkeit des Schalls in demselben Fluid ausdrückt (im vorliegenden Fall zu Vereinfachungszwecken in der Richtung x vorausgesetzt);
- $\omega$ die der interessierenden Frequenz des Referenzsignals zugeordnete Pulsation ist;

- $v_x^a$ die Schätzung der Transformierten im Frequenzbereich der räumlichen Komponente in einem Messvolumen (26) in der Richtung x der durch die akustischen Wellen erzeugten Geschwindigkeit des Fluids ist;

- $v_y^a$ die Schätzung der Transformierten im Frequenzbereich der räumlichen Komponente in einem Messvolumen (26) in der Richtung y der durch die akustischen Wellen erzeugten Geschwindigkeit des Fluids ist;

- $v_z^a$ die Schätzung der Transformierten im Frequenzbereich der räumlichen Komponente in einem Messvolumen (26) in der Richtung z der durch die akustischen Wellen erzeugten Geschwindigkeit des Fluids ist.

8. Schätzungsverfahren nach einem der vorangehenden Ansprüche, **dadurch gekennzeichnet, dass** es einen Schritt der Schätzung (66) des Durchschnitts des Drucks in einem makroskopischen Volumen (36), das zumindest zwei Mal so groß wie das Messvolumen (26) ist, beinhaltet, wobei die akustischen Drücke mit Hilfe des Schätzungsverfahrens an unterschiedlichen Punkten dieses makroskopischen Volumens geschätzt werden.

9. Vorrichtung (8) zur Schätzung des akustischen Drucks in einem makroskopischen Volumen (36) eines Fluids (2), wobei der akustische Druck durch akustische Wellen erzeugt wird; wobei die akustischen Wellen ein stationäres Frequenzspektrum aufweisen, wobei die Vorrichtung (8) Folgendes umfasst:

   - zumindest eine Impfvorrichtung (10), die das Fluid (2) mit Partikeln (12), welche die Lichtstrahlen verbreiten können, impfen kann, wobei die Partikel (12) geeignet sind, sich mit der Geschwindigkeit des Fluids (2) zu bewegen;
   - zumindest einen Sensor (32), der geeignet ist, zumindest ein als Referenzsignal ($r(t)$) bezeichnetes, mit den akustischen Wellen korreliertes Signal zu messen;
   - zumindest eine Quelle (16), die geeignet ist, Lichtstrahlen mit verschiedenen bestimmten Wellenlängen für die Messpfade (18, 20, 22) zu erzeugen, wobei das Fluid (2) sich in Bewegung befindet und für die Strahlen der Pfade (18, 20, 22) mit bestimmten Wellenlängen transparent ist; wobei sich die Lichtstrahlen in einem Messvolumen (26) des Fluids (2) kreuzen;
   - zumindest einen Detektor (24), der geeignet ist, die durch die Partikel (12) verbreiteten Lichtstrahlen zu empfangen, wobei jeder Lichtstrahl einem Messpfad (18, 20, 22) des Detektors (24) zugeordnet ist;
   - zumindest eine Berechnungseinheit (34), die geeignet ist,
   - für jede Richtung (x, y, z) eines Koordinatensystems:

      ■ ein Geschwindigkeitssignal ($v_x(t)$, $v_y(t)$, $v_z(t)$) der Partikel im Messvolumen (26) durch Laser-Doppler-Anemometrie anhand der zu den Messpfaden (18, 20, 22) verbreiteten Lichtstrahlen,
      ■ die Korrelation zwischen dem gemessenen Geschwindigkeitssignal ($v_x(t)$, $v_y(t)$, $v_z(t)$) und dem gemessenen Referenzsignal ($r(t)$),

      ■ die räumliche Komponente $\left( v_x^a, v_y^a, v_z^a \right)$ der durch die akustischen Wellen erzeugten Geschwindigkeit des Fluids anhand der Korrelation,

   - den akustischen Druck in einem makroskopischen Volumen (36) anhand der geschätzten räumlichen Komponenten der Geschwindigkeit des Fluids zu berechnen,

   **dadurch gekennzeichnet, dass** die Berechnungseinheit (34) geeignet ist,

   - das Geschwindigkeitssignal ($v_x(t)$, $v_y(t)$, $v_z(t)$) der Partikel (12) durch Laser-Doppler-Anemometrie in drei unterschiedlichen Richtungen x, y, z;
   - den akustische Druck anhand der Eulerschen Gleichungen in drei Dimensionen zu berechnen.

10. Computerprogramm, **dadurch gekennzeichnet, dass** es Anweisungen zur Umsetzung des Verfahrens nach einem der Ansprüche 1 bis 8 beinhaltet, wenn diese durch einen oder mehrere Prozessoren ausgeführt werden.

## Claims

1. Method of estimating the acoustic pressure in a macroscopic volume (36) of a fluid (2), said method being implemented by an estimating device (8) comprising a seeding device (10) configured to distribute particles (12) in the fluid (2), a source (16) configured to emit light beams of specific different wavelengths, and a detector (24) capable of receiving said light beams scattered by the particles (12) moving in the fluid (2), each said light beam being assigned to a measuring channel (18, 20, 22) of said detector (24); said acoustic pressure being generated by acoustic waves, the acoustic waves having a stationary frequency spectrum, said fluid (2) being in motion and transparent for said beams, the method comprising the following steps:

- seeding (40) the fluid (2) with particles (12) capable of scattering said light beams, said particles (12) being capable of moving at the speed of the fluid (2);
- measuring (42) by means of at least one sensor (32) at least one signal, namely a reference signal ($r(t)$), correlated with the acoustic waves;
- for each direction (x, y, z) of a location:

   • emitting (44) said light beams by means of a source (16) and receiving by means of the detector (24) along said measuring channels (18, 20, 22) light beams scattered by the particles (12);
   • measuring (44) a velocity signal ($v_x(t)$, $v_y(t)$, $v_z(t)$ of the particles (12) in a predefined measuring volume (26) by Laser Doppler Velocimetry on the basis of said scattered light beams;
   • calculating (58) the correlation between the measured velocity signal ($v_x(t)$, $v_y(t)$, $v_z(t)$ and the measured reference signal ($r(t)$);

   • estimating (60) the spatial component of the speed $(v_x^a, \quad v_y^a, \quad v_z^a)$ of the fluid (2) in said direction (x, y, z) generated by the acoustic waves on the basis of said correlation;

- calculating (64) the acoustic pressure in a macroscopic volume (36) from the estimated spatial components of the speed of the fluid,

**characterised in that** the velocity signal ($v_x(t)$, $v_y(t)$, $v_z(t)$ of the particles (12) is measured (44) by Laser Doppler Velocimetry in three different directions x, y, z and **in that** the step of calculating the acoustic pressure is implemented on the basis of Euler equations in three dimensions.

2. Estimation method as claimed in claim 1, **characterised in that** the correlation calculation is made between the fluctuation signals and the reference signal, and **in that** the step of calculating the correlation (58) is preceded by the following steps:

   - calculating (48) an average velocity signal ($\bar{v}_x$, $\bar{v}_y$, $\bar{v}_z$) from the measured velocity signal ($v_x(t)$, $v_y(t)$, $v_z(t)$;
   - calculating (50) a signal representative of the speed fluctuations of the fluid, namely a fluctuation signal ($f_x(t)$, $f_y(t)$, $f_z(t)$), from the average velocity signal ($\bar{v}_x$, $\bar{v}_y$, $\bar{v}_z$) and the measured velocity signal ($v_x(t)$, $v_y(t)$, $v_z(t)$ by subtracting the average velocity signal from the measured velocity signal;
   - calculating (58) the cross spectra ($G_{r,fx}$, $G_{r,fy}$, $G_{r,fz}$) between the reference signal ($r(t)$) and the fluctuation signal ($f_x(t)$, $f_y(t)$, $f_z(t)$), said cross spectra characterising said correlation in each direction x, y and z.

3. Estimation method as claimed in claim 2, **characterised in that** it further comprises the following step:

   - re-sampling (52) the fluctuation signal ($f_x(t_k)$, $f_y(t_k)$, $f_z(t_k)$) to ($f_x(t_l)$, $f_y(t_l)$, $f_z(t_l)$) and the reference signal ($r(t_l)$) at a constant rate.

4. Estimation method as claimed in claim 3, **characterised in that** it further comprises the following step:

   - constructing (54) and (56) standard signals ($e(t_k)$) on the same time basis $\{t_k\}$ as the reference and fluctuation signals prior to re-sampling and then correcting the re-sampled signals.

5. Estimation method as claimed in any one of claims 1 to 2, **characterised in that** it further comprises a step of estimation by segmentation.

6. Estimation method as claimed in any one of the preceding claims, **characterised in that** the estimation step (60) comprises the following steps:

   - calculating each of the modules |$Vx(f)$|, |$V_y(f)$| and |$Vz(f)$| and phases on the basis of the following formulae:

$$|V_x(f)| = \sqrt{\frac{|G_{r,fx}|^2}{|\emptyset_{(r)}|}} \; ; \; |V_y(f)| = \sqrt{\frac{|G_{r,fy}|^2}{|\emptyset_{(r)}|}} \; ; \; |V_z(f)| = \sqrt{\frac{|G_{r,fz}|^2}{|\emptyset_{(r)}|}}$$

$$\varphi(V_x(f)) = \varphi(G_{r,fx}); \quad \varphi(V_y(f)) = \varphi(G_{r,fy}); \quad \varphi(V_z(f)) = \varphi(G_{r,fz});$$

where $\tau(r)$ is the autospectrum of the reference signal,
- calculating, in their complex form, transforms in the frequency domain of the spatial components of the acoustic velocity from the modules and phases calculated above:

$$V_x^a(f) = |V_x(f)|\exp(i\varphi(V_x(f))); \quad V_y^a(f) = |V_y(f)|\exp(i\varphi(V_y(f)));$$

$$V_z^a(f) = |V_z(f)|\exp(i\varphi(V_z(f)));$$

7. Estimation method as claimed in any one of the preceding claims, **characterised in that** the step of calculating (64) the acoustic pressure in the frequency domain is implemented on the basis of the following formula:

$$p = \rho_0 c_0 M_0 v_x^a \ - \ \frac{\rho_0 c_0^2}{\omega}\left[(M_0^2 - 1)\frac{\delta v_x^a}{\delta x} - \frac{\delta v_y^a}{\delta y} - \frac{\delta v_z^a}{\delta z}\right]$$

in which:

- $p$ is the transform in the frequency domain of the acoustic pressure in the macroscopic volume (36);
- $\rho_0$ is the volumetric mass density of the fluid (2) in the macroscopic volume (36);
- $c_0$ is the speed of sound in the fluid (2) in the macroscopic volume (36);
- $M_0$ is the time-averaged Mach number in the macroscopic volume 36; the Mach number is a dimensionless number which expresses the ratio of the local speed of a fluid to the speed of sound in this same fluid (in this instance assumed to be in direction x for reasons of simplification);
- $\omega$ is the pulsation associated with the frequency of interest of the reference signal;
- $v_x^a$ is the estimate, in a measurement volume (26), of the transform in the frequency domain of the spatial component in direction $x$ of the speed of the fluid generated by the acoustic waves;
- $v_y^a$ is the estimate, in a measurement volume (26), of the transform in the frequency domain of the spatial component in direction $y$ of the speed of the fluid generated by the acoustic waves;
- $v_z^a$ is the estimate, in a measurement volume (26), of the transform in the frequency domain of the spatial component in direction $z$ of the speed of the fluid generated by the acoustic waves.

8. Estimation method as claimed in any one of the preceding claims, **characterised in that** it comprises a step of estimating (66) the average of the pressure in a macroscopic volume (36) at least two times larger than the measurement volume (26), the acoustic pressures at different points of this macroscopic volume being estimated using the estimation method.

9. Device (8) for estimating the acoustic pressure in a macroscopic volume (36) of a fluid (2), said acoustic pressure being generated by acoustic waves; the acoustic waves having a stationary frequency spectrum, said device (8) comprising:

- at least one seeding device (10) configured to seed the fluid (2) with particles (12) capable of scattering said light beams, said particles (12) being able to move at the speed of the fluid (2);
- at least one sensor (32) configured to measure at least one signal, namely a reference signal (r(t)), correlated with the acoustic waves;

- at least one source (16) configured to generate light beams of specific different wavelengths for the measuring channels (18, 20, 22); said fluid (2) being in motion and transparent for the beams of the channels (18, 20, 22) of specific wavelengths; said light beams intersecting in a measurement volume (26) of the fluid (2);
- at least one detector (24) configured to receive said light beams scattered by said particles (12), each said light beam being assigned to a measuring channel (18, 20, 22) of said detector (24);
- at least one calculating unit (34) configured to calculate
- for each direction (x, y, z) of a location

• a velocity signal $(v_x(t), v_y(t), v_z(t)$ of said particles in the measuring volume (26) by Laser Doppler Velocimetry from said light beams scattered towards said measuring channels (18, 20, 22);
• the correlation between the measured velocity signal $(v_x(t), v_y(t), v_z(t)$ and the measured reference signal $(r(t))$;
• the spatial component $(v_x^a, \; v_y^a, \; v_z^a)$ of the velocity of the fluid generated by the acoustic waves on the basis of said correlation;

- the acoustic pressure in a macroscopic volume (36) from the estimated spatial components of the speed of the fluid,

**characterised in that** the calculating unit is configured to calculate:

- the velocity signal $(v_x(t), v_y(t), v_z(t)$ of the particles (12) by Laser Doppler Velocimetry in three different directions x, y, z;
- the acoustic pressure on the basis of Euler equations in three dimensions.

**10.** Computer programme, **characterised in that** it comprises instructions for implementing the method as claimed in any one of claims 1 to 8 when they are run by one or more processors.

FIG. 1

EP 2 488 838 B1

40

42

44

46

48

50

52

54

56

58

60

64

66

FIG. 2

19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LAVEILLE M. et al.** Measurement of acoustic quantity fields in duct flow by laser doppler velocimetry. *12th AIAA/CEAS Aeroacoustics Conférence (27th AIAA Aeroacoustics Conférence),* 08 Mai 2006, vol. 3, 1852-1860

- **W.T MAYO ; M.T. SHAY ; S. RITER.** Digital estimation of turbulence power spectra from burst counter LDV data. *Proceedings 2d International Workshop on Laser Velocimetry,* 1974, vol. 1, 16-26
- **H. NOBACH ; E. MÜLLER ; C. TROPEA.** Efficient estimation of power spectral densitry from laser Doppler anemometer data. *Experiments in Fluids,* 1998, vol. 24 (5/6), 499-509